# FASCICULE DE BREVET EUROPEEN

(11) **EP 0 939 019 B1**
(45) Date de publication et mention de la délivrance du brevet: **03.07.2002**
(21) Numéro de dépôt: 99410011.3
(22) Date de dépôt: 25.02.1999
(51) Int. Cl.: B62B 7/14

(54) **Véhicule de déplacement pour enfant en bas âge**
Kinderwagen
Baby transporter

(30) Priorité: 26.02.1998 FR 9802564
(43) Date de publication de la demande: 01.09.1999
(73) Titulaire: Team Tex, 38070 Saint Quentin Fallavier (FR)
(72) Inventeur: Nania, Franck, 01680 Groslee (FR); Tal, Shlomi, 38230 Pont de Cheruy (FR)
(74) Mandataire: Gasquet, Denis

(56) Documents cités:
- DE-U- 29 518 371
- GB-A- 2 262 914
- US-A- 4 634 177
- US-A- 4 664 396
- US-A- 5 133 567
- US-A- 5 188 380

## Description

La présente invention concerne un véhicule de déplacement pour enfant en bas âge du type poussette selon le préambule de la revendication US-A-4664396 montre une telle poussette.

Une poussette comprend, de manière bien connue en soi, une nacelle montée sur un châssis. Ce châssis est équipé de roues et d'une poignée qui permet de diriger la poussette et de soulever ces roues pour le franchissement d'un trottoir par exemple.

Les poussettes existantes ont pour inconvénient d'avoir une structure relativement complexe et d'être par conséquent onéreuses à fabriquer. En effet, le châssis d'une telle poussette doit présenter un cadre pour supporter la nacelle, et ce cadre, ainsi que ladite poignée, doivent être montés pivotants ou coulissants par rapport aux jambages du châssis pour pouvoir être escamotés lors du repliage de ce châssis, afin que ce dernier puisse être stocké avec un encombrement réduit ou puisse, par exemple, prendre place dans le coffre d'une voiture.

Les châssis des poussettes existantes sont, de plus, du fait de cette structure complexe, relativement lourds.

En outre, la poussette présente un encombrement important à l'état déplié, ce qui peut limiter l'accès à certains lieux, par exemple un ascenseur exigu, ou peut être gênant dans certains lieux, par exemple dans un restaurant.

La présente invention vise à remédier à l'ensemble de ces inconvénients. Le problème est résolu par les caractéristiques décrités dans la partie caractérisante de la revendication 1.

Selon un mode de réalisation de la poussette selon l'invention, les moyens complémentaires d'assemblage permettent l'assemblage de la nacelle et du châssis en au moins deux endroits, distincts dans un plan longitudinal.

Selon une caractéristique complémentaire de la poussette de l'invention, l'assemblage de la nacelle sur le châssis ne peut s'effectuer que lorsque les jambages du châssis sont en position active déployée.

Selon une variante d'exécution de la poussette, les moyens d'assemblage complémentaires comportent deux éléments d'assemblage portés respectivement par chacun des jambages du châssis et deux éléments d'assemblage portés par la nacelle et destinés à coopérer avec les deux éléments d'assemblage du châssis.

Selon une caractéristique de cette variante d'exécution de la poussette, les éléments d'assemblage du châssis sont constitués par une saillie solidaire d'un jambage et un logement d'axe solidaire de l'autre jambage et en ce que les éléments d'assemblage de la nacelle comportent un évidement situé dans la coque et destiné à coopérer avec la saillie ainsi qu'une portion d'axe solidaire en pivotement de la poignée et destinée à être introduite dans le logement.

Selon une autre caractéristique, le logement d'axe possède une fente d'introduction et en ce que la portion d'axe présente deux méplats parallèles dont l'écartement est égal à la largeur de la fente d'introduction.

Selon une caractéristique complémentaire de la poussette de l'invention, celle-ci est caractérisée en ce que les moyens prévus pour immobiliser la poignée sont conformés pour permettre en outre une immobilisation de la poignée dans une autre position inclinée, opposée à la première position citée, de telle sorte que la poussette puisse être utilisée avec l'enfant tourné soit vers la personne qui conduit la poussette, soit face à la route.

Par ailleurs, l'invention concerne également un châssis destiné à la poussette de l'invention, celui ci étant caractérisé en ce qu'il comporte deux jambages articulés autour d'un axe de pivotement entre une position de rangement et une position active déployée, chacun des jambages comportant un élément d'assemblage destiné à permettre l'assemblage d'une nacelle.

Selon une autre caractéristique, le châssis comporte des moyens de verrouillage et de déverrouillage destinés à permettre le verrouillage et le déverrouillage de l'articulation entre les jambages lorsqu'ils se trouvent en position active déployée.

Par ailleurs, l'invention concerne également une nacelle pour la poussette de l'invention, celle-ci étant caractérisée en ce qu'elle présente des éléments d'assemblage et de verrouillage destinés à permettre son assemblage et son verrouillage avec chacun des jambages du châssis et en ce qu'elle présente une poignée de manutention montée pivotante sur la coque et susceptible d'être immobilisée par rapport à la coque selon plusieurs positions différentes par des moyens de prise complémentaires et en ce que la poignée assure le verrouillage de la nacelle sur le châssis quand la poignée est dans une position autre que celle d'assemblage et d'introduction.

D'autres caractéristiques et avantages de l'invention se dégageront de la description qui va suivre en regard des dessins annexés qui ne sont donnés qu'à titre d'exemples non limitatifs.

Les figures 1 à 4 illustrent un premier mode de réalisation et sa variante d'exécution de la poussette selon l'invention.

La figure 1 en est une vue en perspective avant montage, avec arrachement partiel.

La figure 2 en est une vue de profil avec arrachement partiel, après montage.

La figure 3 en est une vue en bout.

La figure 4 en est une vue partielle, de profil et à échelle agrandie, selon une variante de réalisation.

Les figures 5 à 12 illustrent une deuxième mode de réalisation de la poussette selon l'invention.

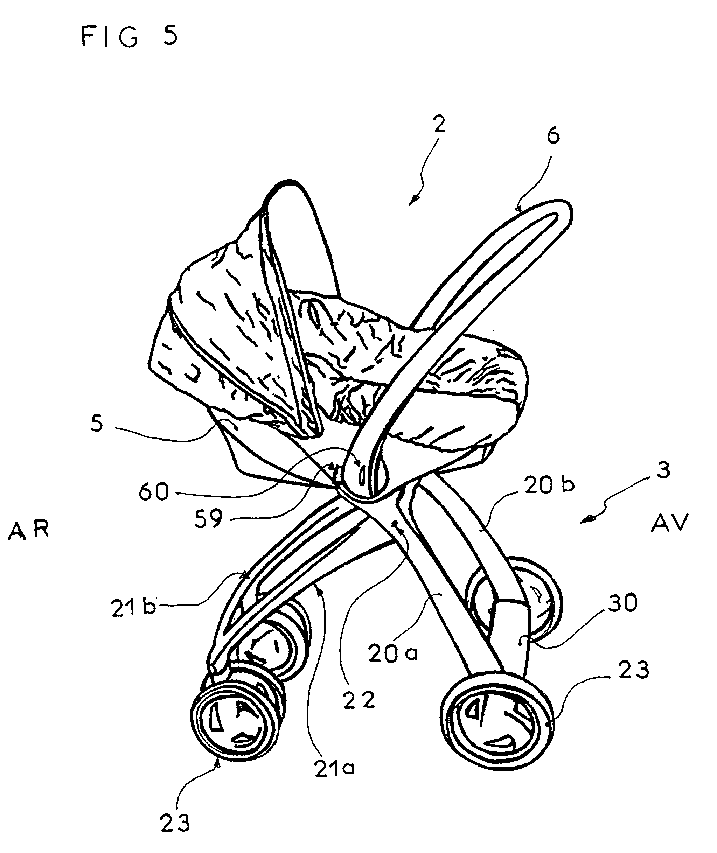

La figure 5 illustre en perspective le deuxième mode de réalisation de la poussette.

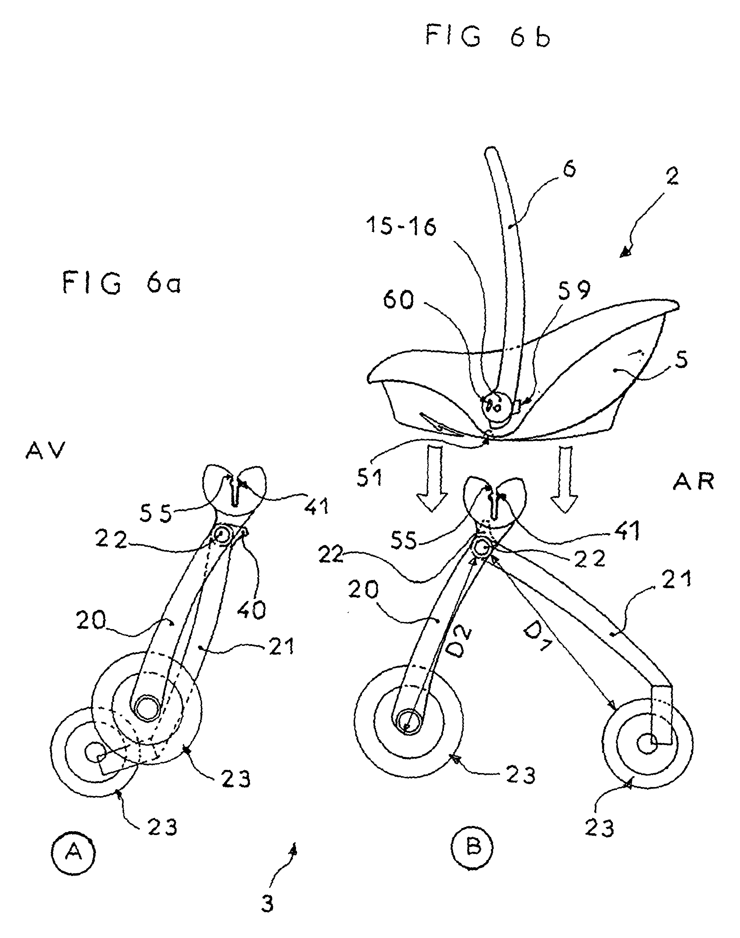

La figure 6a représente en vue latérale le châssis en position inactive de rangement.

La figure 6b représente en vue latérale le châssis en position déployée et sa nacelle en position d'assemblage.

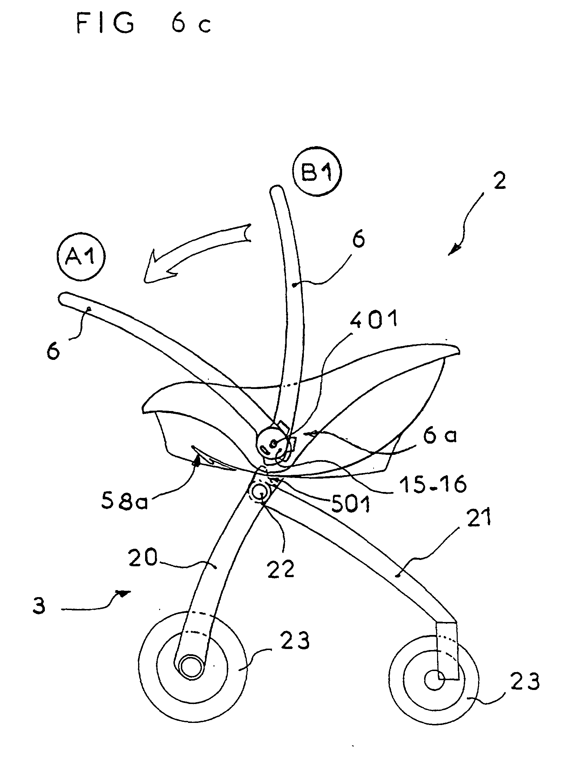

La figure 6c représente en vue latérale le châssis et la nacelle assemblés.

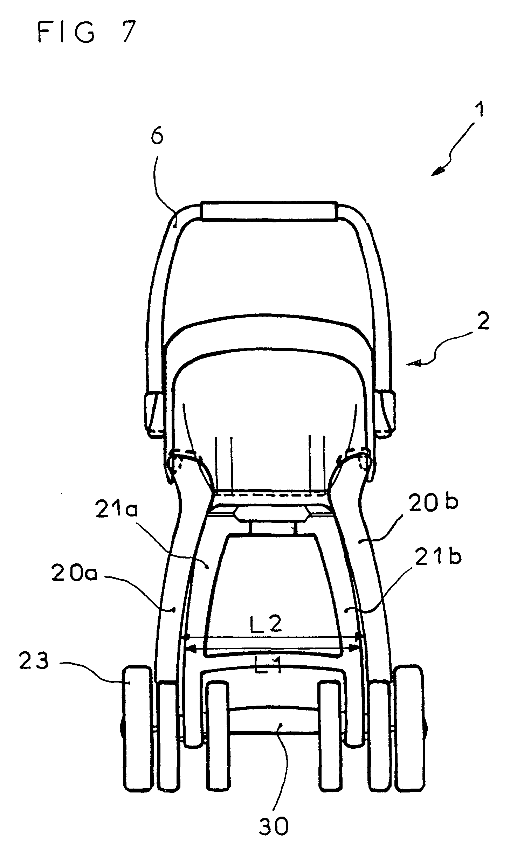

La figure 7 illustre la poussette selon une vue arrière.

Les figures 8a à 8c illustrent schématiquement l'assemblage et le verrouillage de la nacelle sur le châssis.

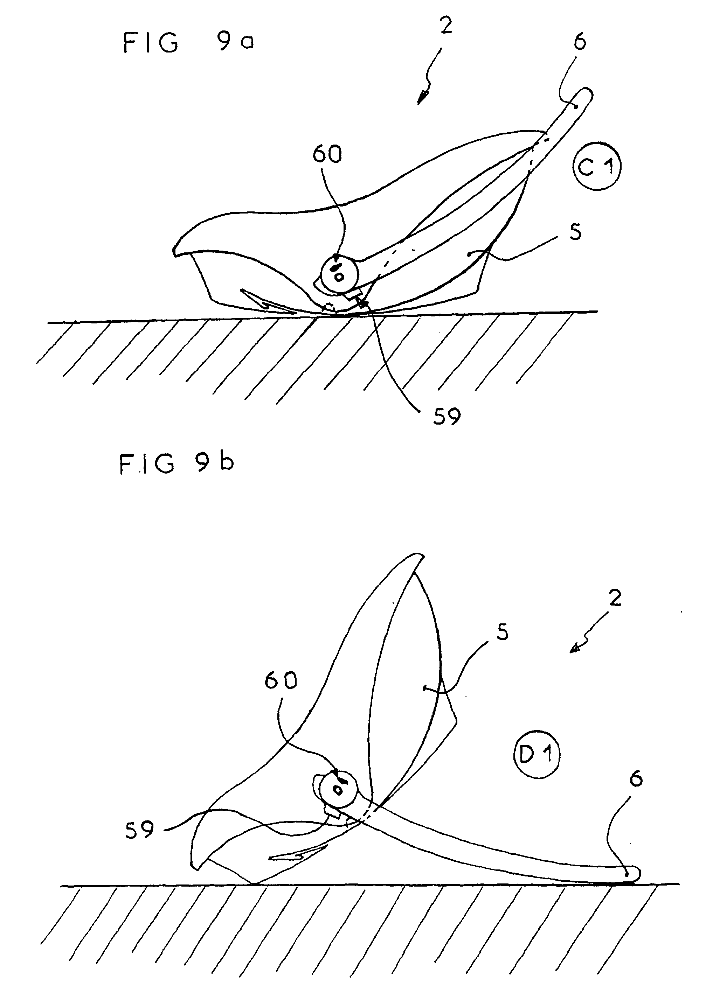

La figure 9a représente en vue latérale la nacelle en position de rangement.

La figure 9b illustre selon une vue similaire à la figure 9a la nacelle en position dite «transat».

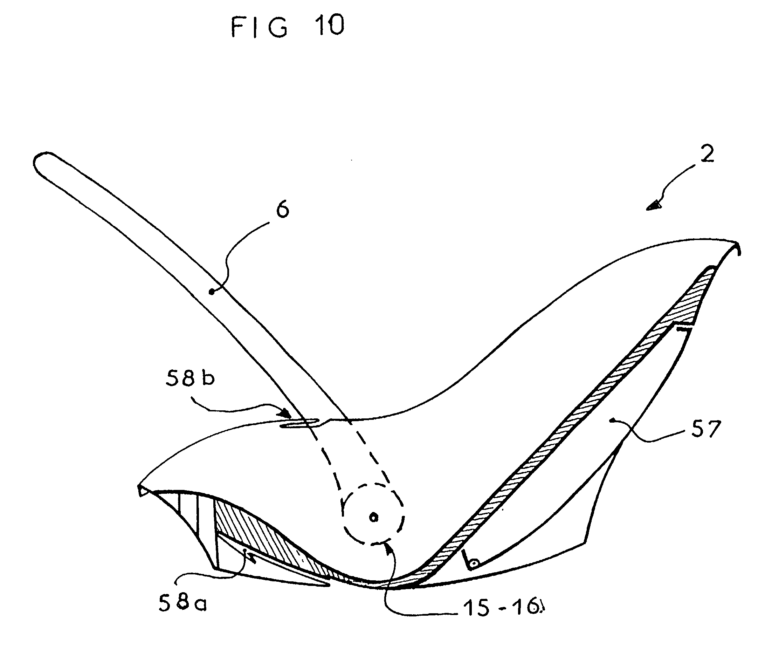

La figure 10 est une vue en coupe longitudinale de la nacelle.

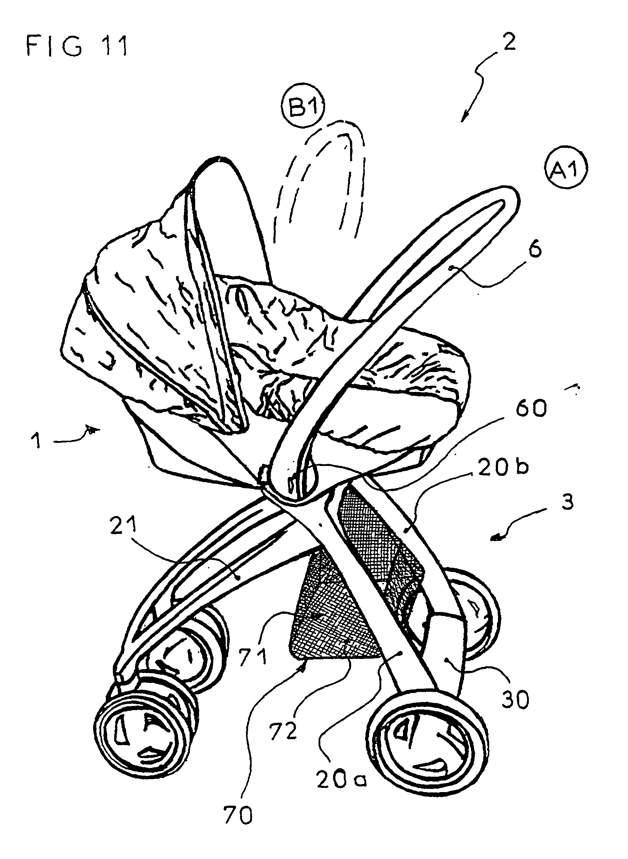

La figure 11 illustre en perspective une variante d'exécution de la poussette.

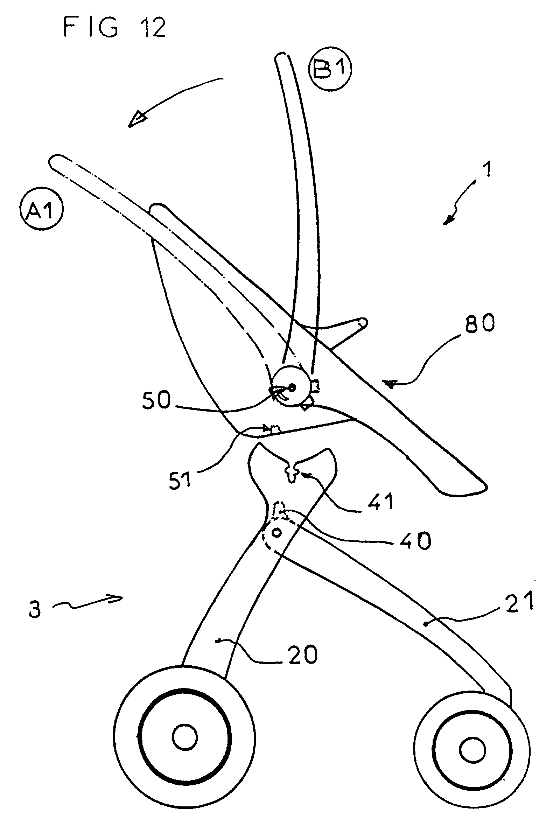

La figure 12 représente en vue latérale une autre variante d'exécution de la poussette.

Les figures représentent une poussette (1) pour enfant en bas âge, comprenant une nacelle (2) pouvant être montée de manière amovible sur un châssis (3).

Selon l'invention, la poussette (1) est formée par un châssis (3) dépourvu de la poignée, constitué par deux jambages (20, 21) montés pivotants entre une position inactive de rangement (A) et une position active déployée (B) dans laquelle il est destiné à recevoir la nacelle (2), ladite nacelle étant munie d'une poignée (6) qui permet notamment de maintenir et de mouvoir ladite poussette.

La nacelle (2) comprend une coque (5) en matière synthétique moulée et une poignée (6) en forme de U inversé, montée pivotante sur les deux bords opposés de la coque (5).

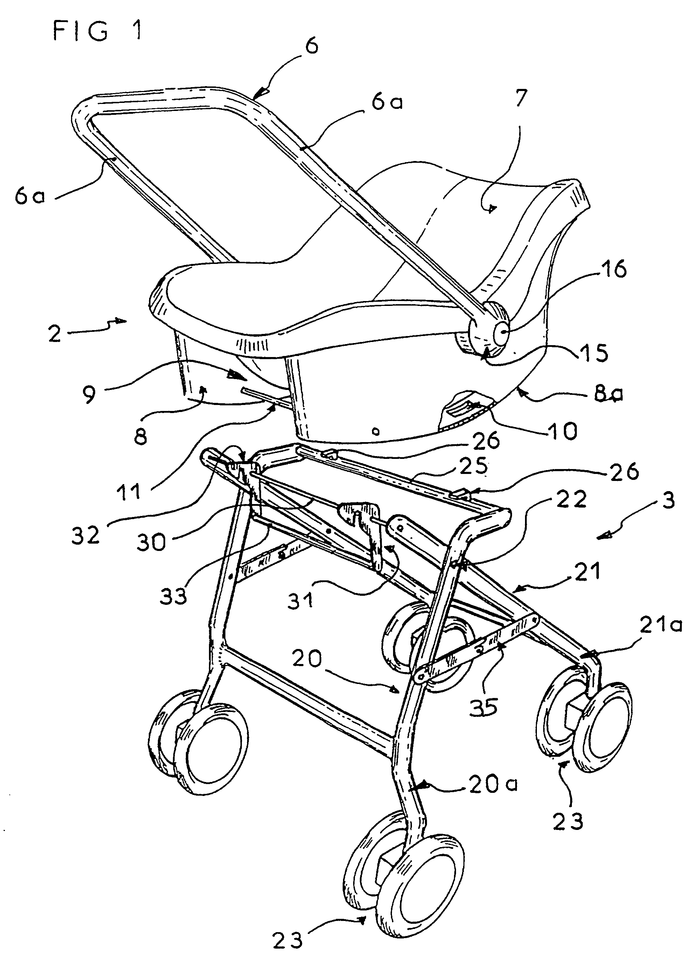

Selon un premier mode de réalisation de la poussette, illustré figures 1 à 4, la coque (5) présente une paroi de fond (7) formant un siège incliné pour un enfant en bas âge, et deux piétements longitudinaux (8) dont le bord inférieur (8a) est courbe pour permettre une possibilité de balancement de la nacelle (2) lorsque celle-ci est posée sur une surface. La paroi (7) se recourbe vers le haut à une extrémité de la coque (5), de sorte qu'un espace (9) est aménagé entre cette paroi (7) et les deux piétements (8).

La coque (5) reçoit un rembourrage (non représenté) sur lequel l'enfant peut être placé.

La paroi (7) comprend deux lumières rectangulaires (10), et une barre transversale (11), fixée à la coque (5), relie les deux piétements (8) au niveau de l'espace (9).

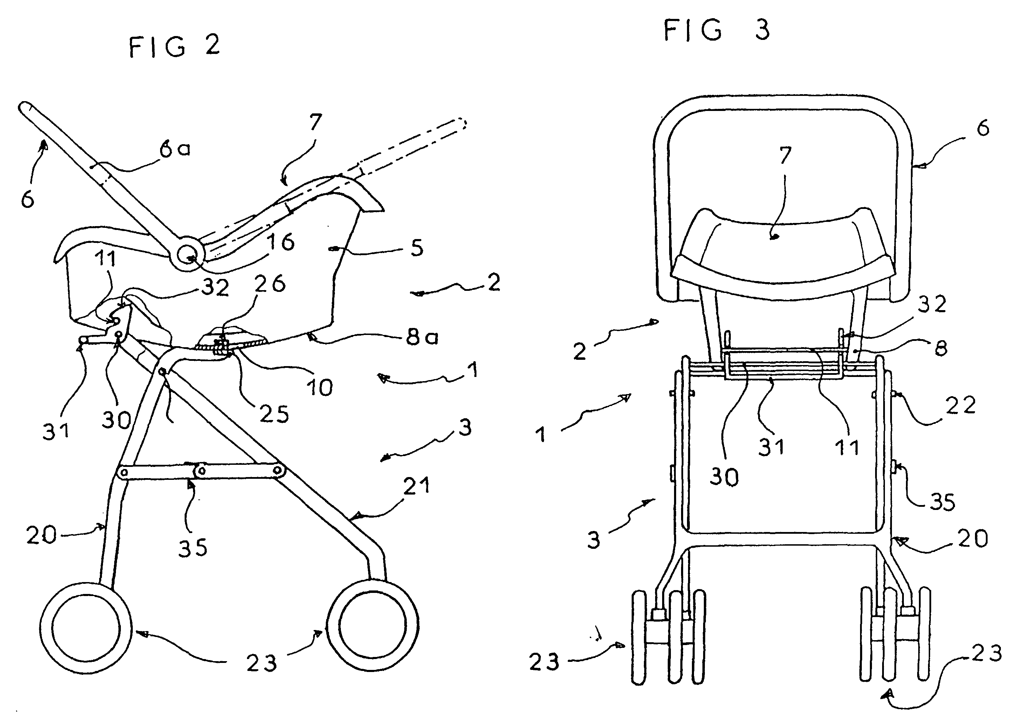

L'extrémité libre de chaque branche latérale (6a) de la poignée (6) se termine par une partie circulaire (15) en forme de couvercle, qui pivote autour d'un tourillon (16) solidaire du bord correspondant de la coque (5). Ces parties (15) et tourillons (16) sont pourvus de moyens de prise complémentaires, venant normalement en prise, sous l'action d'éléments élastiques, pour immobiliser la poignée (6), par exemple, dans la position inclinée représentée en traits pleins sur les figures 1 ou 2, dans la position verticale représentée en traits mixtes sur la figure 2 ou dans la position inclinée montrée en traits mixtes sur cette même figure ; ces moyens peuvent être mis hors de prise, notamment par écartement des parties (15) et des tourillons (16) à l'encontre desdits éléments élastiques, pour permettre le pivotement de la poignée (6) entre ces positions.

Ces moyens sont, par exemple, constitués par des nervures et cannelures radiales aménagées dans les faces en regard des parties (15) et tourillons (16), qui sont normalement maintenues en prise réciproque par des ressorts placés entre ces parties (15) et tourillons (16), coaxialement à ceux-ci.

Selon une premier mode de réalisation illustré figures 1 à 4, le châssis (3) comprend deux jambages (20, 21) montés pivotants l'un par rapport à l'autre au niveau de leur zone supérieure, autour d'axes (22), et comprenant des paires de roues (23) à leur partie inférieure.

Les extrémités supérieures des branches latérales (20a) de l'un de ces jambages (20) sont reliées l'une à l'autre par une traverse (25) sur laquelle sont fixées deux pattes recourbées (26). Ces pattes (26) peuvent être engagées au travers des lumières (10) et peuvent être engagées derrière la paroi (7), ainsi que cela apparaît à la figure 2

Selon ce premier mode de réalisation, les moyens de verrouillage de la nacelle (2) sur le châssis (3) présentent une configuration particulière, les extrémités supérieures des branches (21) de l'autre jambage (21) sont reliées l'une à l'autre par une tige (30) montée pivotante par rapport à elles. Cette tige (30) comprend un organe de verrouillage (31) solidaire d'elle-même, présentant deux parties (32) en forme de crochet et une barre transversale de manoeuvre (33). Chacune des parties (32) présente une encoche apte à être engagée avec frottement autour de la tige (11) lorsque les pattes (26) sont engagées derrière la paroi (7), pour assurer, ainsi que cela apparaît plus particulièrement à la figure 2, le verrouillage de la nacelle (2) sur le châssis (3).

Par ailleurs, deux paires de biellettes (35) sont reliées l'une à l'autre par une de leurs extrémités et sont reliées chacune par leur autre extrémité à l'un des deux jambages (20, 21). Ces paires de biellettes (35) permettent de limiter le pivotement relatif des jambages (20, 21) pour définir la position de déploiement du châssis (3) montrée aux figures.

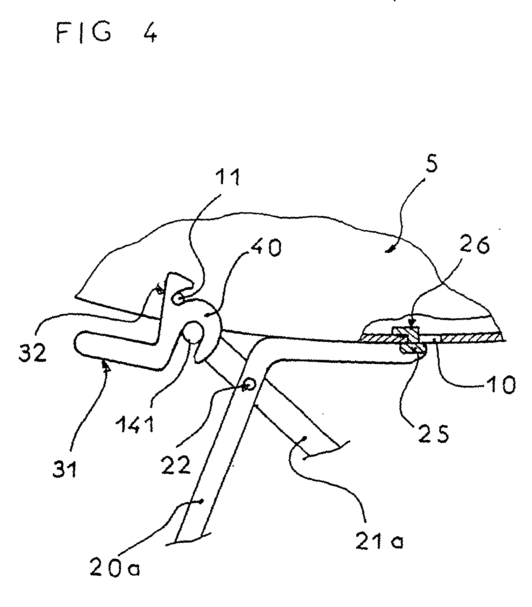

La figure 4 montre une variante de réalisation du premier mode de réalisation de la poussette (1), dans laquelle, par simplification, les parties ou éléments déjà décrits sont désignés par les mêmes références numériques. Dans ce cas, l'organe (31) présente des parties recourbées (40) qui peuvent pivoter autour d'une traverse (141) reliant les extrémités supérieures des branches (21), de telle sorte que les parties (32) en forme de crochet puissent être engagées autour de la tige (11).

Selon un deuxième mode de réalisation de l'invention, la poussette (1) présente une nacelle (2) dont la coque est avantageusement réalisée en matière plastique. La poignée (6) de la poussette (1) est solidaire de la nacelle (2) et peut être immobilisée en plusieurs positions par rapport à la coque (5). La nacelle (2) est destinée à être assemblée et verrouillée par des moyens d'assemblage et de verrouillage complémentaires à un châssis (3) formé de deux jambages (20, 21) articulés entre eux autour d'un axe transversal (22). Notons que le châssis ne présente pas de poignée destinée à la maintenir et à la diriger, ladite poignée étant portée par la nacelle, ce qui est tout à fait novateur.

Selon ce deuxième mode de réalisation, le châssis (3) et plus précisément ses jambages (20, 21) sont constitués par des profilés en matière plastique. Ainsi, la forme et les dimensions de la section des jambes (20a, 20b, 21a, 21b) qui forment les jambages (20, 21) varient selon leur longueur. Le jambage arrière (21) formé de ses deux jambes (21a, 21b) présente une section de forme évolutive dont les dimensions augmentent des roues (23) vers l'axe d'articulation (22). Inversement, le jambage avant (20) présente des jambes (20a, 20b) dont la section diminue depuis les roues (23) vers l'axe d'articulation (22), comme le montre la figure 5.

Selon le deuxième mode de réalisation et comme le montrent les figures 6a et 7, les jambages avant et arrière (20, 21) présentent une configuration destinée à faciliter le pliage du châssis (3) de manière à obtenir un encombrement minimum lorsque celui-ci se trouve en position inactive de rangement. Pour ce faire, la largeur (L1) entre les parois externes des jambes (21a, 21b) du jambage arrière (21) est inférieure à la largeur (L2) entre les parois internes des jambes (20a, 20b) du jambage avant (20). Notons, comme le montre la figure 6b, que la longueur (D1) entre l'axe de pivotement (22) et le sommet des roues (23) portées par le jambage arrière (21) est supérieure à la distance D2 entre ledit axe de pivotement (22) et la traverse avant (30) qui porte l'axe des roues (23) du jambage avant (20) ; ceci permet avantageusement de permettre aux roues arrières (23) de venir se positionner dans le prolongement des jambes du jambages avant (20) lorsque le châssis (3) se trouve en position inactive de rangement (A), comme le montre la figure 6a.

Selon ce deuxième mode de réalisation de la poussette, les moyens d'assemblage et de verrouillage complémentaires destinés à permettre la fixation et le verrouillage de la nacelle (2) sur le châssis (3) sont portés par le châssis (3) d'une part et par la nacelle (2) d'autre part. Ils sont constitués avantageusement par des éléments d'assemblage de type mâle (40, 50) destinés à coopérer avec des éléments d'assemblage de type femelle (41, 51). Notons que, selon ce deuxième mode de réalisation, le châssis (3) comporte un élément mâle (40) et un élément femelle (41), tandis que la coque présente un élément femelle (51) et un élément mâle (50) respectifs.

Selon le deuxième mode de réalisation, la coopération entre les éléments d'assemblage et de verrouillage respectifs s'effectue en au moins deux endroits (401, 501) distincts dans un plan longitudinal, comme le montrent les figures 6b et 6c. Il va de soi que la poussette (1) présentant un plan longitudinal de symétrie générale (P), ces deux endroits de fixation (401, 501) et les éléments d'assemblage (40, 51, 50, 51) qui les constituent se retrouvent symétriquement de l'autre côté de la poussette (1). On entendra par endroits distincts, deux endroits dont les projections respectives sur un plan longitudinal sont distinctes.

Notons que l'assemblage en deux endroits distincts (401, 501) permet d'éviter le pivotement de la nacelle autour d'un des deux points d'assemblage. Selon le deuxième mode de réalisation de la poussette de l'invention, la nacelle (2) présente dans sa coque (5) un évidement (51) destiné à coopérer avec une saillie (40) du châssis (3) et une portion d'axe (50) destinée à coopérer avec un logement d'axe (41) respectif du châssis (3).

Il est important de noter que les deux éléments d'assemblage (40, 41) du châssis (3) qui forment les deux endroits de fixation (401, 501) sont portés chacun par un jambage (20, 21) et son donc mobiles en pivotement l'un par rapport à l'autre autour de l'axe de pivotement (22) des jambages (20, 21). De cette manière, l'assemblage de la nacelle (2) sur le châssis (3) ne peut s'effectuer que lorsque les jambages (20, 21) sont en position active déployée (B) puisque les éléments d'assemblage (40, 41) portés par leurs jambages respectifs (20, 21) ne prennent une position où ils sont susceptibles de coopérer avec les éléments complémentaires (50, 51) de la nacelle (2) qu'une fois que le châssis (3) est dans sa position déployée.

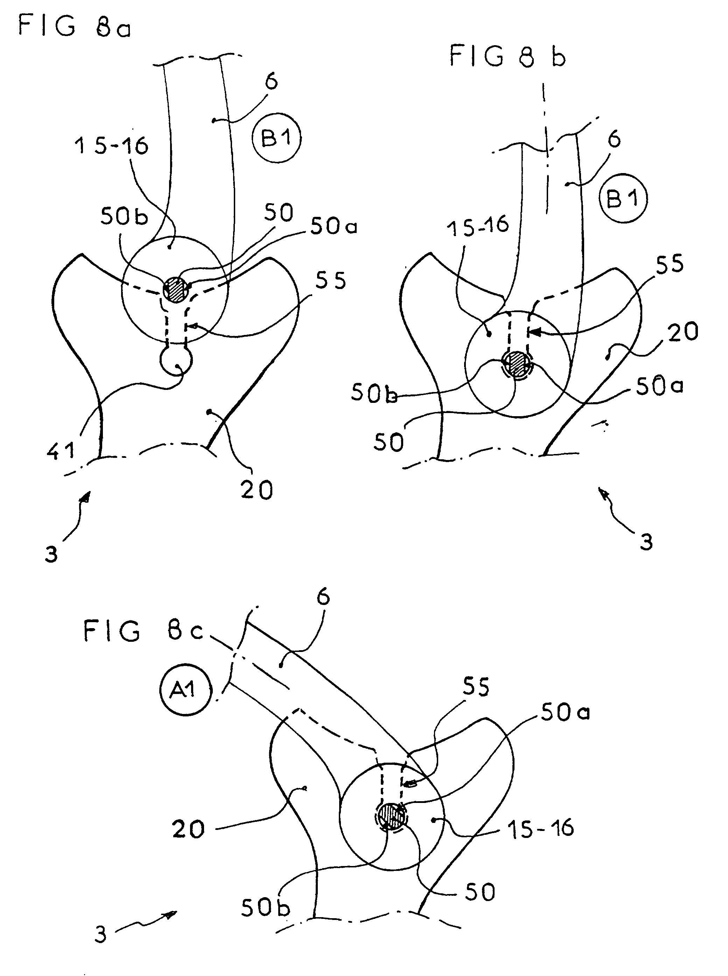

Selon ce deuxième mode de réalisation de la poussette, l'un des éléments d'assemblage de la nacelle (2) est solidaire en mouvement de la poignée (6), tandis que l'autre élément d'assemblage est solidaire de la coque (5) de manière à ce que la coopération des éléments d'assemblage (50, 51) de la nacelle (2) avec les éléments complémentaires respectifs (40, 41) du châssis (3) ne puisse s'effectuer que dans une position relative donnée de la poignée (6) par rapport à la coque (5) dite position d'assemblage ou d'introduction (B1). Ainsi, la coque (5) présente un évidement (51) situé latéralement dans sa paroi, destiné à coopérer avec une saillie (40) solidaire du jambage arrière (21), tandis que la poignée (6) porte au niveau de leur partie circulaire (15), à leur extrémité libre (6a), une portion d'axe (50) qui présente deux méplats (50a, 50b) parallèles destinés à permettre l'introduction de la portion d'axe, par une fente d'introduction (55), dans son logement complémentaire (41) situé sur le jambage avant (20). Notons que la largeur de la fente d'introduction (55) est égale au jeu près à la largeur séparant les méplats (50a, 50b) tandis que le logement d'axe (41) présente le même diamètre que la portion d'axe (50), comme le montre les figures 8a, 8b, 8c qui illustrent leur coopération. De ce fait, lorsque la portion d'axe (50) pivote dans son logement (41), elle se trouve verrouillée et ne peut ressortir que lorsqu'elle présente les méplats dans la direction de la fente, c'est-à-dire que la poignée est dans sa position d'assemblage ou position d'introduction.

Selon ce deuxième mode de réalisation, la coopération des quatre éléments d'assemblage respectifs (40, 41, 50, 51) de la nacelle (2) et du châssis (3) permet de verrouiller intégralement leur assemblage. Il est important de noter que l'assemblage et le désassemblage ne peuvent s'effectuer que lorsque le châssis est en position active déployée (B) et que la nacelle présente sa poignée (6) dans une position active d'assemblage (B1) illustrée figures 6b, 8a et 8b où la poignée (6) est sensiblement perpendiculaire à la coque (5) et contenue dans un plan sensiblement vertical. Une fois assemblé, le pivotement de la poignée provoque le pivotement de la portion d'axe (50) dans son logement (41) et provoque le verrouillage de la nacelle. Il va de soi que les moyens d'assemblage de la nacelle sur le châssis pourraient présenter une configuration différente dans leur nombre ou dans leur forme par exemple sans pour autant sortir du champ de protection de l'invention.

Par ailleurs, on peut noter que les moyens de prise complémentaires (15, 16) situés à l'extrémité libre (6a) de la poignée (6) permettent avantageusement le positionnement de la poignée de manière verrouillée par rapport à la coque (5) dans quatre positions, à savoir, une position de poussée (A1) illustrée figure 6c où l'utilisateur peut mouvoir la poussette (1), une position d'introduction (B1), une position dite de rangement (C1) où la poignée se trouve sensiblement dans le plan du dossier, illustrée figure 9a, et une position dite «transat» (D1) où la poignée (6) s'étend à l'arrière de la coque (5) pour constituer un appui sur le sol afin de positionner la nacelle (2) comme un siège tel que le montre la figure 9b.

On peut noter que l'indexation de la poignée (6) dans ses positions s'effectue à l'aide des moyens de prises complémentaires (15, 16). Ceux-ci présentent avantageusement un double dispositif de sécurité active, c'est-à-dire qu'ils possèdent deux organes de déverrouillage (59, 60) des moyens de prise (15, 16) qui doivent être actionnés simultanément pour permettre le changement de position de la poignée (6). Les organes de déverrouillage (59, 60) peuvent, par exemple, être formés par des boutons ou leviers situés sur le tourillon (16) ou la poignée (6).

Selon ce deuxième mode de réalisation, la coque (5) de la nacelle (2) présente dans sa partie arrière un espace de rangement qui peut être réalisé par une enceinte fermée ou coffre (57) située dans le dossier de l'assise, comme le montre la figure 10. La coque (5) présente également des passants ou des points d'ancrage (58a, 58b) destinés au passage de la ceinture de sécurité lors de la mise en place de la nacelle dans une voiture.

Par ailleurs, selon une variante d'exécution illustrée figure 11, le châssis (3) présente un espace de rangement (70) formé, par exemple, par un filet (71) et une plaque rigide (72), ledit espace étant avantageusement positionné entre les jambes (20a, 20b) du jambage avant (20).

Selon une autre variante d'exécution, le châssis (3) est identique au châssis du deuxième mode de réalisation, il est constitué de deux jambages et est dépourvu de poignée. Il est destiné à recevoir une assise (80) qui comporte des éléments d'assemblage (50, 51) identiques à ceux du précédent mode de réalisation, comme le montre la figure 12. Cette assise (80) est destinée à permettre de former une poussette (1) où l'enfant est en position sensiblement assise.

Notons également que les jambages arrières portent à leur extrémité de manière connue des trains de roues pivotants destinés à faciliter les virages de la poussette.

Selon l'invention, l'ensemble des éléments constitutifs de la poussette, hormis l'habillage de la nacelle, peuvent être réalisés en matière plastique avantageusement par injection, par exemple.

Selon une variante d'exécution non représentée de la poussette, le châssis comporte des moyens de verrouillage et de déverrouillage destinés à permettre le blocage des jambages en position active déployée. Ces moyens de verrouillage peuvent avantageusement être constitués par une butée disposée sur un des jambages à proximité de l'articulation et sollicitée élastiquement pour venir verrouiller l'autre jambage une fois que celui-ci a atteint la position active déployée. Cette butée doit ensuite être sollicitée par l'utilisateur à l'encontre des moyens élastiques pour permettre le pivotement des jambages vers leur position repliée de rangement, de manière connue en soi.

De ce qui précède, on a compris que le verrouillage de la nacelle (2) sur le châssis (3) s'effectue lors du pivotement de la poignée (6) de la nacelle (2) de sa position d'assemblage et d'introduction (B1) vers sa position de poussée (A1). Inversement, le déverrouillage de la nacelle (2) se fera lors du pivotement inverse de la poignée, c'est à dire de sa position de poussée (A1) vers sa position d'assemblage et d'introduction (B1).

L'invention fournit ainsi une poussette pour enfant en bas âge ayant une structure simple et peu onéreuse à fabriquer, légère, facile à manipuler, peu encombrante et permettant un portage facile de la nacelle.

Ainsi, la poignée (6) peut présenter une structure unitaire, comme cela est montré au dessin, ou peut présenter des branches latérales télescopiques, comme montré en traits mixtes à la figure 2, de telle sorte que la longueur de ces branches latérales puisse être réglée en fonction des besoins. Des moyens tels qu'une série de trous espacés aménagés dans l'une des parties télescopiques et un téton solidaire de l'autre partie télescopique et pouvant être engagé sélectivement dans l'un ou l'autre des trous précités, permettent de régler la longueur desdites branches télescopiques ; d'autres positions inclinées que celles montrées à la figure 2 sont possibles.

## Revendications

1. Poussette (1) pour enfant en bas âge, comprenant une nacelle (2), un châssis (3) équipé de roues (23) sur lequel la nacelle (2) peut être montée, et une poignée (6) permettant de conduire cette poussette (1),
- la nacelle (2) comprend une coque (5) et la poignée (6) et présente une structure relativement rigide, les extrémités de la poignée (6) étant montées pivotantes sur les deux bords opposés de la nacelle (2) ;
- des moyens complémentaires d'assemblage et de verrouillage (10, 11, 26, 33, 40, 41, 50, 51) sont aménagés d'une part dans la nacelle (2) et d'autre part sur le châssis (3), pour permettre le montage amovible de la nacelle (2) sur le châssis (3), et
- le châssis (3) est constitué par deux jambages (20, 21) et est dépourvu de poignée,
- tandis-que, l'assemblage et le désassemblage du châssis (3) et de la nacelle (2) ne peuvent s'effectuer que lorsque la poignée (6) est en position d'assemblage ou d'introduction (B1) par rapport à la coque (5), position selon laquelle la poignée est contenue dans un plan sensiblement, vertical,
- **caractérisé en ce que**, le verrouillage de la nacelle (2) sur le châssis (3) se fait par le pivotement de la poignée (6) de la nacelle (2), et **en ce que** le châssis (3) comprend deux jambages (20, 21) montés pivotants l'un par rapport à l'autre entre une position inactive de rangement (A) et une position active déployée (B), chacun des jambages comporte un élément d'assemblage destiné à permettre l'assemblage de la nacelle.

2. Poussette (1) selon la revendication 1, **caractérisée en ce que** les moyens complémentaires d'assemblage (10, 11, 26, 33, 40, 41, 50, 51) permettent l'assemblage de la nacelle (2) et du châssis (3) en au moins deux endroits (401, 501), distincts dans un plan longitudinal.

3. Poussette (1) selon la revendication 1 ou 2, **caractérisée en ce que** l'assemblage de la nacelle (2) sur le châssis (3) ne peut s'effectuer que lorsque les jambages (20, 21) du châssis (3) sont en position active déployée (B).

4. Poussette (1) selon l'une quelconque des revendications précédentes, **caractérisée en ce que** les moyens d'assemblage complémentaires comportent deux éléments d'assemblage (40, 41) portés respectivement par chacun des jambages (20, 21) du châssis (3) et deux éléments d'assemblage (50, 51) portés par la nacelle (2) et destinés à coopérer avec les deux éléments d'assemblage (40, 41) du châssis (3).

5. Poussette (1) selon la revendication 4, **caractérisée en ce que** les éléments d'assemblage du châssis sont constitués par une saillie (40) solidaire d'un jambage et un logement d'axe (41) solidaire de l'autre jambage et **en ce que** les éléments d'assemblage de la nacelle comportent un évidement (51) situé dans la coque (5) et destiné à coopérer avec la saillie (40) ainsi qu'une portion d'axe (50) solidaire en pivotement de la poignée (6) et destinée à être introduite dans le logement (41).

6. Poussette (1) selon la revendication 5, **caractérisée en ce que** le logement d'axe (41) possède une fente d'introduction (55) et **en ce que** la portion d'axe (50) présente deux méplats parallèles (50a, 50b) dont l'écartement est égal à la largeur de la fente d'introduction.

7. Poussette (1) selon l'une quelconque des revendications précédentes, **caractérisée en ce que** les moyens prévus pour immobiliser la poignée (6) sont conformés pour permettre en outre une immobilisation de la poignée (6) dans une autre position inclinée, opposée à la première position citée, de telle sorte que la poussette (1) puisse être utilisée avec l'enfant tourné soit vers la personne qui conduit la poussette, soit face à la route.

8. Châssis (3) pour poussette (1) selon l'une quelconque des revendications précédentes, **caractérisé en ce qu'**il comporte deux jambages (20, 21) articulés autour d'un axe de pivotement (22) entre une position de rangement (A) et une position active déployée (B), chacun des jambages comportant un élément d'assemblage destiné à permettre l'assemblage d'une nacelle.

9. Châssis (3) selon la revendication 8, **caractérisé en ce qu'**il comporte des moyens de verrouillage et de déverrouillage destinés à permettre le verrouillage et le déverrouillage de l'articulation entre les jambages (20, 21) lorsqu'ils se trouvent en position active déployée (B).

10. Nacelle (2) pour poussette (1) destinée à être montée sur un châssis (3) selon l'une des revendications 8 et 9, **caractérisée en ce qu'**elle présente des éléments d'assemblage et de verrouillage (50, 51) destinés à permettre son assemblage et son verrouillage avec chacun des jambages du châssis (3) et **en ce qu'**elle présente une poignée (6) de manutention montée pivotante sur la coque (5) et susceptible d'être immobilisée par rapport à la coque (5) selon plusieurs positions différentes (A1, B1, C1, D1) par des moyens de prise complémentaires (15,16) et **en ce que** la poignée (6) assure le verrouillage de la nacelle (2) sur le châssis (3) quand la poignée (6) est dans une position autre que celle d'assemblage et d'introduction (B1).

## Patentansprüche

1. Kinderwagen (1) für Kleinkinder, umfassend einen Aufsatz (2), ein mit Rädern (23) versehenes Fahrgestell (3), auf das der Aufsatz (2) montiert werden kann, und einen Griff (6) zum Schieben des Kinderwagens (1),
- der Aufsatz (2) umfasst eine Schale (5) und den Griff (6) und weist eine relativ steife Struktur auf, wobei die Enden des Griffes (6) drehbar an den beiden sich gegenüberliegenden Rändern des Aufsatzes (2) angebracht sind;
- sich ergänzende Montage- und Verriegelungsmittel (10, 11, 26, 33, 40, 41, 50, 51) sind einerseits in dem Aufsatz (2) und andererseits am Fahrgestell (3) zur lösbaren Montage des Aufsatzes (2) auf das Fahrgestell (3) angeordnet , und
- das Fahrgestell (3) besteht aus zwei Streben (20, 21) und ist nicht mit einem Griff ausgebildet,
- wobei Fahrgestell (3) und Aufsatz (2) nur dann montiert und demontiert werden können, wenn sich der Griff (6) in Bezug auf die Schale (5) in einer Montage- oder Einführposition (B1) befindet, wobei der Griff (6) in dieser Position in einer im Wesentlichen vertikal verlaufenden Ebene liegt,
- **dadurch gekennzeichnet, dass** das Verriegeln des Aufsatzes (2) auf dem Fahrgestell (3) durch Drehen des Griffs (6) des Aufsatzes (2) erfolgt und dass das Fahrgestell (3) zwei Streben (20, 21) umfasst, die zwischen einer inaktiven Verstauungsposition (A) und einer entfalteten Aktivposition (B) drehbar zueinander angebracht sind, wobei jede Strebe (20, 21) ein Montageelement zum Montieren des Aufsatzes (2) aufweist.

2. Kinderwagen (1) nach Anspruch 1, **dadurch gekennzeichnet, dass** die sich ergänzenden Montagemittel (10, 11, 26, 33, 40, 41, 50, 51) die Montage des Aufsatzes (2) und des Fahrgestells (3) an mindestens zwei getrennten Stellen (401, 501) einer Längsebene ermöglichen.

3. Kinderwagen (1) nach Anspruch 1 oder 2, **dadurch gekennzeichnet, dass** die Montage des Aufsatzes (2) auf dem Fahrgestell (3) nur dann erfolgen kann, wenn sich die Streben (20, 21) des Fahrgestells (3) in der entfalteten Aktivposition (B) befinden.

4. Kinderwagen (1) nach einem der vorstehenden Ansprüche, **dadurch gekennzeichnet, dass** die sich ergänzenden Montagemittel ausgebildet sind mit zwei Montageelemente (40,41), welche jeweils einer der Streben (20, 21) des Fahrgestells (3) zugeordnet sind, und zwei Montageelemente (50, 51), welche dem Aufsatz (2) zugeordnet und mit den zwei Montageelementen (40, 41) des Fahrgestells (3) wirkverbunden sind.

5. Kinderwagen (1) nach Anspruch 4, **dadurch gekennzeichnet, dass** die Montageelemente des Gestells aus einem einstückig mit der einen Strebe ausgebildeten Vorsprung (40) und aus einer einstückig mit der anderen Strebe ausgebildeten Achsaufnahme (41) bestehen, und dass die Montageelemente des Aufsatzes (2) eine in der Schale (5) vorgesehene, mit dem Vorsprung (40) wirkverbundene Aussparung (51) und einen drehfest mit dem Griff (6) verbundenen, zur Einführung in die Aufnahme (41) vorgesehenen Achsteil (50) umfassen.

6. Kinderwagen (1) nach Anspruch 5, **dadurch gekennzeichnet, dass** die Achsaufnahme (41) einen Einführspalt (55) besitzt und dass der Achsteil (50) zwei parallele Stege (50a, 50b) aufweist, deren Abstand der Breite des Einführspalts entspricht.

7. Kinderwagen (1) nach einem der vorstehenden Ansprüche, **dadurch gekennzeichnet, dass** die zum Feststellen des Griffs (6) vorgesehenen Mittel derart ausgebildet sind, dass sie darüber hinaus den Griff (6) in einer anderen, der erstgenannten Position gegenüberliegenden, geneigten Position fixieren können, so dass der Kinderwagen (1) derart benutzt werden kann, dass das Kind entweder der Person, die den Kinderwagen schiebt, oder der Straße zugewandt ist.

8. Fahrgestell (3) für Kinderwagen (1) nach einem der vorstehenden Ansprüche, **dadurch gekennzeichnet, dass** es zwei gelenkig mit einer Drehachse (22) verbundene Streben (20, 21) umfasst, welche zwischen einer Verstauungsposition (A) und einer entfalteten Aktivposition (B) schwenkbar sind, wobei die Streben jeweils ein Montageelement zum Montieren eines Aufsatzes umfassen.

9. Fahrgestell (3) nach Anspruch 8, **dadurch gekennzeichnet, dass** es Verriegelungs- und Entriegelungsmittel zum Verriegeln und Entriegeln des Gelenks zwischen den Streben (20, 21) umfasst, wenn diese sich in der entfalteten Aktivposition (B) befinden.

10. Aufsatz (2) für Kinderwagen (1) zur Montage auf ein Fahrgestell (3) nach einem der Ansprüche 8 und 9, **dadurch gekennzeichnet, dass** er Montage- und Verriegelungselemente (50, 51) zu dessen Montage und Verriegelung mit jeweils einer Strebe des Fahrgestells (3) aufweist und dass er einen drehbar an der Schale (5) angeordneten Griff (6) aufweist, der relativ zur Schale (5) in mehreren verschiedenen Positionen (A1, B1, C1, D1) mittels ergänzender Eingriffsmittel (15, 16) feststellbar ist, und dass der Griff(6) den Aufsatz (2) auf dem Fahrgestell (3) verriegelt, wenn der Griff (6) sich in einer anderen Position als der Montage- und Einführposition (B1) befindet.

## Claims

1. Pushchair (1) for a young infant, comprising a cradle (2), a frame (3) which is equipped with wheels (23) onto which the cradle (2) can be fitted, and a handle (6) which makes it possible to push this pushchair (1),
- the cradle (2) comprises a shell (5) and the handle (6) and has a relatively rigid structure, the ends of the handle (6) being fitted such as to pivot on the two opposite edges of the cradle (2);
- additional means (10, 11, 26, 33, 40, 41, 50, 51) for assembly and locking are provided firstly on the cradle (2) and secondly on the frame (3), in order to permit detachable fitting of the cradle (2) onto the frame (3), and
- the frame (3) consists of two legs (20,21) and has no handle,
- whereas the frame (3) and the cradle (2) can be assembled and dismantled only when the handle (6) is in the position of assembly or introduction (B1) relative to the shell (5), in which position the handle is contained on a substantially vertical plane,
- **characterised in that** the cradle (2) is locked onto the frame (3) by pivoting the handle (6) of the cradle (2) and **in that** the frame (3) comprises two legs (20,21) which are fitted such as to pivot relative to one another between an inactive position for storage (A) and a deployed active position (B), and each of the legs comprises an assembly element which is designed to permit assembly of the cradle.

2. Pushchair (1) according to claim 1, **characterised in that** the additional means (10,11,26,33,40,41,50,51) for assembly permit assembly of the cradle (2) and of the frame (3) in at least two separate places (401,501) on a longitudinal plane.

3. Pushchair (1) according to claim 1 or claim 2, **characterised in that** the cradle (2) can be assembled onto the frame (3) only when the legs (20,21) of the frame (3) are in the deployed active position (B).

4. Pushchair (1) according to any one of the preceding claims, **characterised in that** the additional means for assembly comprise two assembly elements (40,41) which are supported respectively by each of the legs (20,21) of the frame (3) and two assembly elements (50,51) which are supported by the cradle (2) and are designed to co-operate with the two assembly elements (40,41) of the frame (3).

5. Pushchair (1) according to claim 4, **characterised in that** the assembly elements of the frame consist of a projection (40) which is integral with a leg and a shaft receptacle (41) which is integral with the other leg and **in that** the assembly elements of the cradle comprise a receptacle (51) which is situated in the shell (5) and is designed to co-operate with the projection (40) as well as a shaft portion (50) which is integral with pivoting of the handle (6) and is designed to be introduced into the receptacle (41).

6. Pushchair (1) according to claim 5, **characterised in that** the shaft receptacle (41) has an introduction slot (55) and **in that** the shaft portion (50) has two parallel flattened parts (50a,50b), the spacing of which is equal to the width of the introduction slot.

7. Pushchair (1) according to any one of the preceding claims, **characterised in that** the means provided for immobilisation of the handle (6) are shaped in order to permit immobilisation of the handle (6) also in another inclined position, opposite the first aforementioned position, such that the pushchair (1) can be used with the infant facing either the person who is pushing the pushchair or facing the street.

8. Frame (3) for a pushchair (1) according to any one of the preceding claims, **characterised in that** it comprises two legs (20,21) which are articulated around a pivoting shaft (22) between a position of storage (A) and a deployed active position (B), each of the legs comprising an assembly element which is designed to permit assembly of a cradle.

9. Frame (3) according to claim 8, **characterised in that** it comprises means for locking and unlocking which are designed to permit locking and unlocking of the articulation between the legs (20,21) when the latter are in the deployed active position (B).

10. Cradle (2) for a pushchair (1) which is designed to be fitted onto a frame (3) according to one of claims 8 or 9, **characterised in that** it has assembly and locking elements (50,51) which are designed to permit its assembly and locking with each of the legs of the frame (3) and **in that** it has a control handle (6) which is fitted such as to pivot on the shell (5) and can be immobilised relative to the shell (5) according to a plurality of different positions (A1,B1,C1,D1) by additional grasping means (15,16) and **in that** the handle (6) assures locking of the cradle (2) onto the frame (3) when the handle (6) is in a position other than that of assembly and introduction (B1).
